# EUROPEAN PATENT APPLICATION

(11) **EP 2 319 293 A1**
(43) Date of publication of application: **11.05.2011**
(21) Application number: 09806451.2
(22) Date of filing: 29.07.2009
(51) Int. Cl.: A01F 29/08

(54) **BIOMASS CUTTING SHEARS INTENDED FOR A COMPACTION OR BALING APPARATUS**

(30) Priority: 04.08.2008 ES 200802326
(71) Applicant: Talleres Ramon Castro, S.L., 33794 Castropol-Asturias (ES)
(72) Inventor: CASTRO FERNANDEZ, Ramón, E-33794 Barres Castropol - Austurias (ES); VILLARRICA VIÑES, Jorge, E-33318 Villaviciosa - Austurias (ES)
(74) Representative: Arpe Fernandez, Manuel de
(86) International application number: PCT/ES2009/000404
(87) International publication number: WO 2010/018259

(57) **Abstract**

Biomass cutting shears intended for a compaction or baling apparatus, comprising an inner blade holder (3) and an outer blade holder (4), with fixed or interchangeable semi-circular blades (5) and (6), said inner blade holder (3) being mounted inside the outer blade holder (4), so that the blades (5) and (6) cross one another when moved by the cylinders (7). The assembly comprised by the blade holders (3) and (4) and the cylinders (7) is mounted on an anchoring structure (8) connected to the end side of the machine (2); the blade holders (3) and (4) slide sideways inside the structure (8), which includes stop elements (9) for limiting the travel thereof. In addition, the invention includes a funnel (10) for the introduction and centering of the bale, as well as travel sensors (11). Furthermore, plates have been provided between the blade holders (3) and (4) and between the outer blade holder (4) and the anchoring structure (8), said plates being made of a sliding material.

## Description

### Object of the Invention

The invention, as indicated in the title of this description, relates to a biomass cutting shears intended for a compaction or baling apparatus, providing to its intended use some advantages and innovative characteristics, apart from other advantages that are inherent to its construction and organisation, that will be described hereinafter and which represent a significant improvement when compared with those systems currently known in the state of art that are used for the same purposes.

### Background of the invention

There are different types of devices designed for the purposes herein indicated. However, all of them present a problem with the method used to cut the biomass bale. The different offers currently available in the market are generally based on a cutting system by means of gouge's cutting chain. This system, apart from being somewhat inefficient, has the inconvenient that the chains are seriously worn, and they are broken in many occasions.

Such inconvenience entails the need to stop the machine, with the relevant waste of time and the expenses incurred.

Therefore, it is necessary to find an alternative cutting method with a better performance than the currently existing systems and that solves the above mentioned inconveniences in an efficient and practical manner, which is the object of the present invention. On the other hand, it must be highlighted that the applicant is not aware of the existence of any other invention with similar characteristics, either from a technical, structural or configuration point of view.

### Brief Description of the Invention

Thus, the biomass cutting shears intended for a compaction or baling apparatus proposed by the invention represents by itself a significant novelty within its scope of application since, according to its creation, the biomass cutting system obtained satisfactorily achieves the previously mentioned objectives. The characteristics of the invention, that distinguish it from the systems already known in the state of art, are appropriately included in the final claims attached to this description.

Specifically, the biomass cutting shears intended for a compaction or baling apparatus that is the subject matter of the invention, when compared with the conventional systems previously mentioned, obtains a cleaner cut of the biomass bale, requires lesser maintenance and has a very low risk of breakage, thus avoiding the stoppage of the machine and consequently increasing the productivity.

To that effect, the cutting shears that is the subject matter of the invention, which is located at the end side of the compaction machine essentially consists of two blade holders, namely an inner blade holder and an outer blade holder, where semi-circular blades have been arranged to carry out the cutting of the biomass bale.

It should be highlighted that such blades can be fixed or, advantageously, interchangeable, and in this latter case they are fixed to the relevant blade holder by means of screws.

The inner blade holder is mounted inside the outer blade holder, so that both blades cross one another during the sideways movement. It has been foreseen the incorporation of a series of plates made of a sliding material, such as polyamide, arranged between both blade holders, to make such displacement easier and prevent them from wearing out.

Furthermore, two cylinders have been arranged inside the blade holders. Such cylinders are horizontally arranged, one of them at the bottom and the other one on the upper part, and they have been fixed to the relevant distal ends of each blade holder; such cylinders are in charge of moving the blade holders and, therefore, to exert the necessary force to allow the cutting of the bale.

This way, when the cylinders are closed, the blades are separated and allow the passing of the bale between them. When the cylinders are opened, the blades cross one another and cut off the bale at the desired length.

One important factor to be taken into consideration is that the said blades, as a result of the layout of the cylinders, that have been anchored to the blade holder, and not to the framework, are centred around the nucleus during the cutting operation, which transmits no stresses to the framework.

On the other hand, the assembly comprising the blade holders and the cylinders is mounted on an anchoring structure which allows to couple it to the compaction machine for which the cutting shears are intended. Similarly, plates are provided between the outer blade holder and such anchoring structure, the said plates being made of a sliding material, in order to facilitate the displacement and prevent them from wearing out.

It should be highlighted that the blade holders can slide with respect to the anchoring structure, thus making the self-centring mentioned above easier. Furthermore, the incorporation of stop elements has been foreseen at the sides of the anchoring structure, to prevent that the travel of the blade holders does not exceed the travel limits.

Referring again to the invention, it should also be highlighted the incorporation of a funnel located at the input side of the cutting shears, which is fixed to the anchoring structure by means of screws, and which is used to facilitate the introduction of the bale and to centre it, in order to facilitate the cutting operation

Finally, the upper part of the anchoring structure includes a series of travel sensors, that determine the length of the travel of the blade holders.

Consequently, the biomass cutting shears intended for a compaction or baling apparatus that has been described in the previous paragraphs represents an innovative structure with structural and constitutive features which were unknown up to this time for such purpose. These reasons, along with its practical usefulness, provide the invention with sufficient grounds to obtain the exclusivity protection which has been applied for.

### DESCRIPTION OF THE DRAWINGS

In order to complement the present description, and in an effort to help to better understand the characteristics of the invention, a set of drawings have been attached to the present description where, for illustration purposes, and without limitation, the following has been represented:
Figure 1 shows a perspective view of a biomass compaction machine where an exemplary cutting shears according to the invention has been incorporated, showing its main components, their arrangement and layout.
Figures 2 and 3 represent views of the inner and outer blade holders comprised by the cutting shears.
Figure 4 shows a side view of the blade holders once they have been mounted, showing the installation of the cylinders that move such blade holders.

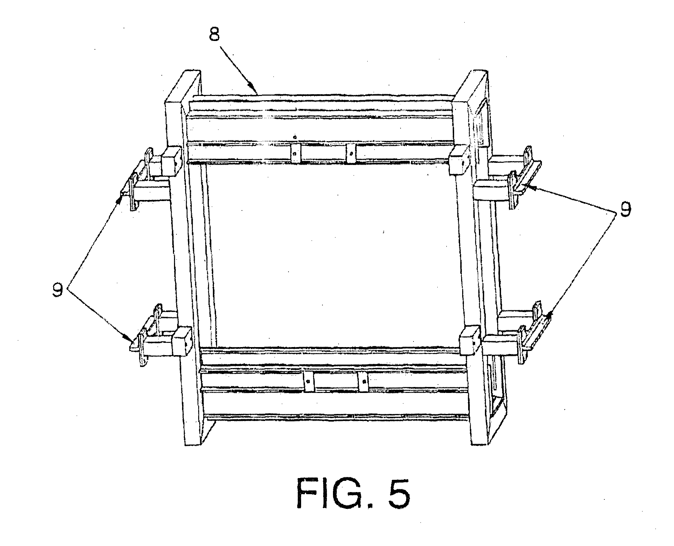

Figure 5 shows a perspective view of the anchoring structure.

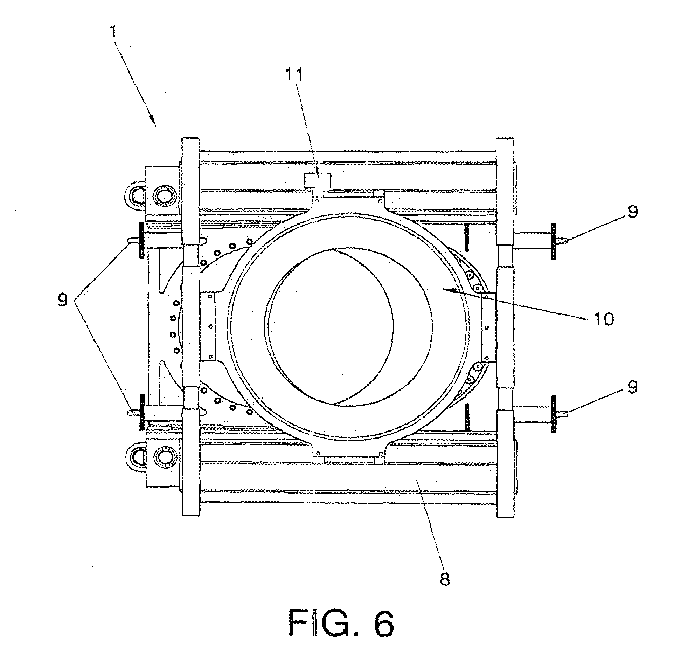

Figure 6 shows a perspective view of the cutting shears assembly, where it can be appreciated the arrangement of the blade holders in the anchoring structure, as well as that of the funnel located at the input side.

### Description of a preferred Embodiment of the Invention

In the light of the above mentioned figures, and according to the numbering method used, they show an example of a preferred embodiment of the invention which comprises the parts and items that have been indicated and which are hereinafter described in more detail.

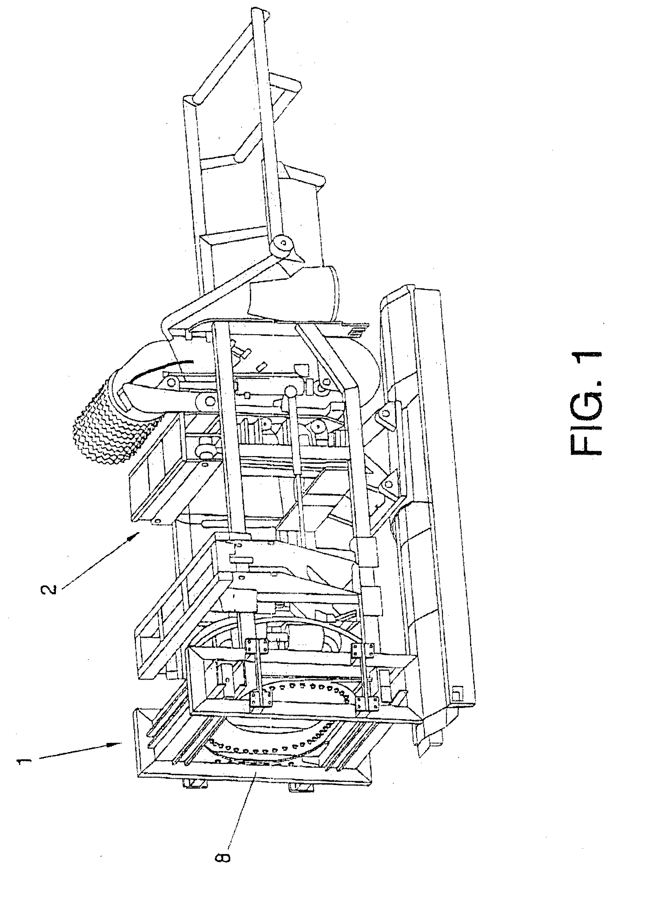

Thus, as it can be appreciated in such figures, the cutting shears assembly (1), intended for a biomass compaction machine (2), and which is located at the end side of such machine, as it can be seen in figure 1, is essentially formed by two blade holders, an inner blade holder (3) an outer blade holder (4), where semi-circular blades (5) and (6) have been respectively mounted, and which perform the cutting of the biomass bale.

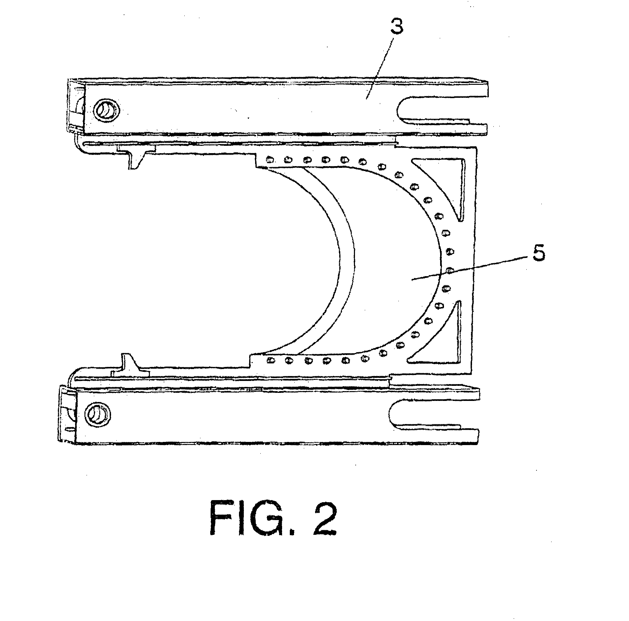

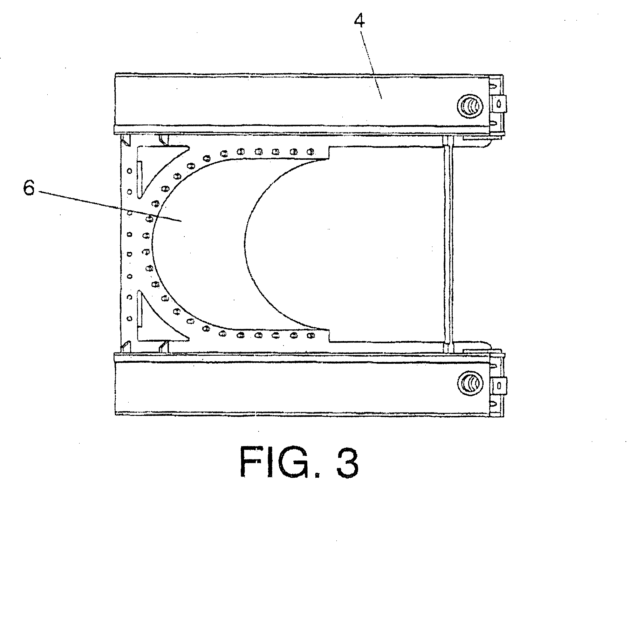

Such blades (5) and (6) can be of a fixed type or, as it is shown in the example depicted in figures 2 and 3, of an interchangeable type and, in such a case, they are screwed to the relevant blade holders (3) and (4).

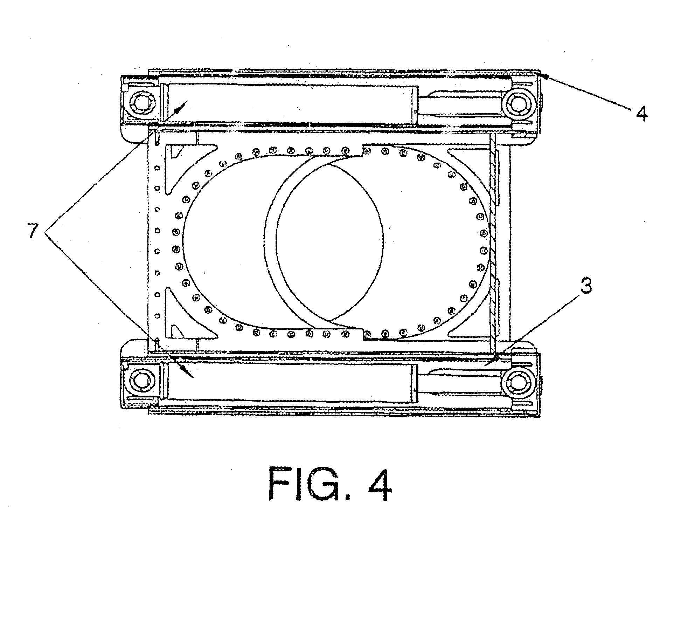

As it can be appreciated in Figure 4, the inner blade holder (3) is mounted inside the outer blade holder (4) so that, when sliding sideways, the relevant blades (5) and (6) cross one another. The incorporation of a set of plates (not shown), made of a sliding material, such as polyamide, has been foreseen, the said plates are arranged between both blade holders, to facilitate their sliding and prevent them from wearing out.

Furthermore, two cylinders (7) have been horizontally arranged inside the inner (3) and outer (4) blade holder, one of them at the bottom and the other one at the upper part. Such cylinders are anchored to the respective distal ends of each blade holder, and they are in charge of moving the blade holders and exerting the necessary force to allow the cutting of the bale.

On the other hand, the assembly formed by the blade holders (3) and (4) and the cylinders (7) is mounted on an anchoring structure (8) that allows to couple such assembly to the compaction machine (2) to which the cutting shears assembly (1) is intended. It should be mentioned that between the outer blade holder (4) and the anchoring structure (8) a set of plates (not shown), made of a sliding material has been foreseen, the said plates being intended to facilitate the sliding movement and prevent them from wearing out.

The blade holders (3) and (4) can slide sideways with respect to the anchoring structure (8) and a series of stops (9) are provided at the sides of such anchoring structure (8), to prevent the blade holders (3) and (4) from exceeding their travel limits.

The cutting shears assembly (1) also comprises a funnel (10) located at the input side of the cutting shears, which is fixed to the anchoring structure (8) by means of screws, and which is used to facilitate the introduction of the bale and to centre it, so that the cutting operation becomes easier.

Finally, the upper part of the anchoring structure (8) includes a series of travel sensors (11), that determine the length of the travel of the blade holders (3) and (4).

Once the nature of the invention has been sufficiently described, as well as its method of implementation, it has not been considered necessary to explain it in greater detail so that any person skilled in the art may understand the scope and the advantages derived from such invention. However, it should be also stated that, provided that the essential nature of the invention is respected, it could be implemented by means of other embodiments whose details are different from the one shown in the example, such other embodiments being also covered by the protection which is hereby applied for, provided that its basic principles are not altered, changed or modified.

## Claims

1. Biomass cutting shears intended for a compaction or bailing apparatus, which is intended for a biomass compaction machine (2) and located at the end side of such machine, **characterized in that** it comprises two blade holders, an inner blade holder (3) and an outer blade holder (4), where semi-circular blades (5) and (6) have been respectively mounted, and where the inner blade holder (3) is mounted inside the outer blade holder (4), so that both blades (5) and (6) cross one another during the sideways movement. A pair of cylinders (7) has been provided for such displacement. Such cylinders are horizontally arranged, one of them at the bottom and the other one on the upper part, inside the inner (3) and the outer blade holder (4), and they have been fixed to the relevant distal ends of each blade holder; **in that** the assembly comprised by the blade holders (3) and (4) and the cylinders (7) is mounted on an anchoring structure (8), that allows it to be coupled to the machine (2); and **in that** the blade holders (3) and (4) slide sideways with respect to the anchoring structure (8), being provided a series of stops (9) at the sides of such anchoring structure (8), to prevent the blade holders (3) and (4) from exceeding their travel limits.

2. Biomass cutting shears intended for a compaction or bailing apparatus, according to claim 1, **characterized in that** a funnel (10) has been fixed to the anchoring structure (8) by means of screws, which is used to facilitate the introduction of the bale in the cutting shears (1) and to centre it to facilitate the cutting operation.

3. Biomass cutting shears intended for a compaction or bailing apparatus, according to claim 1, **characterized in that** the upper part of the anchoring structure (8) comprises a series of travel sensors (11) that determine the length of the travel of the blade holders (3) and (4).

4. Biomass cutting shears intended for a compaction or bailing apparatus, according to claim 1, **characterized in that** a set of plates made of a sliding material, such as polyamide, have been provided between the blade holders (3) and (4), in order to facilitate the sliding and prevent wearing.

5. Biomass cutting shears intended for a compaction or bailing apparatus, according to claim 1, **characterized in that** a set of plates made of a sliding material have been provided between the outer blade holder (4) and the anchoring structure (8), in order to facilitate the sliding and prevent wearing.

6. Biomass cutting shears intended for a compaction or bailing apparatus, according to claim 1, **characterized in that** the blades (5) and (6) can be of a fixed or of an interchangeable type and, in such a case, they are fixed to the relevant blade holder (3) and (4) by means of screws.
